# EUROPÄISCHE PATENTANMELDUNG

(11) **EP 0 570 835 A1**
(43) Veröffentlichungstag der Anmeldung: **24.11.1993**
(21) Anmeldenummer: 93107778.8
(22) Anmeldetag: 13.05.1993
(51) Int. Cl.: B01D 53/34, B01J 20/02

(54) **Sorption von NH3 mit dotierten oxidischen Sorbenzien**

(30) Priorität: 22.05.1992 DE 4216865; 25.02.1993 DE 4305781
(71) Anmelder: Solvay Deutschland GmbH, D-30173 Hannover (DE)
(72) Erfinder: Hoffmeister, Michael, W-3000 Hannover 1 (DE); Schwetje, Norbert, W-3000 Hannover 72 (DE); Schultz, Egon, W-3160 Lehrte (DE); Strauss, Günther, W-3000 Hannover 1 (DE); Falke, Holger, W-3005 Hemmingen 1 (DE); Schumacher, Verena, W-3016 Seelze 1 (DE)
(74) Vertreter: Lauer, Dieter, Dr.

(57) **Zusammenfassung**

Beschrieben wird ein Verfahren zur Sorption von NH₃ mit Sorbenzien, umfassend bestimmte Übergangsmetallsalze, insbesondere Kupfersalze, auf vorzugsweise amorphen oxidischen Trägern. Beschrieben werden auch neue NH₃-Sorbenzien.

## Beschreibung

Die Erfindung bezieht sich auf ein Verfahren zur Sorption von NH₃ mit oxidischen Sorbenzien, die mit bestimmten Übergangsmetallionen dotiert sind, sowie auf neue, im erfindungsgemäßen Verfahren verwendbare Sorbenzien.

Es ist bereits bekannt, NH₃ aus Gasen durch Kontaktieren mit Reagenzien, beispielsweise Säuren, zu sorbieren. Die DE-OS 40 20 914 lehrt die katalytische Zersetzung von NH₃, gegebenenfalls in Anwesenheit von Sauerstoff, unter selektiver Stickstoffbildung.

Aufgabe der vorliegenden Erfindung ist es, ein Verfahren zur Sorption von NH₃ aus Gasen anzugeben, welches selektiv wirkt, die Wiederverwertung des sorbierten NH₃ und des Sorbens gestattet und technisch einfach durchzuführen ist.

Diese Aufgabe wird durch das erfindungsgemäße Verfahren gelöst. Das erfindungsgemäße Verfahren zur Sorption von NH₃ aus Gasen ist dadurch gekennzeichnet, daß man die Gase mit einem selektiven NH₃-Sorbens kontaktiert, umfassend ein Sorptionsmittel ausgewählt aus der Gruppe der anorganischen oder organischen Salze mit Fe²⁺, Fe³⁺, Co²⁺, Ni²⁺, Cr²⁺, Cr³⁺, Cu¹⁺, Cu²⁺, Mn²⁺ und Zn²⁺-Ionen auf einem oxidischen Träger auf Basis von SiO₂, Al₂O₃ oder Alumosilikat, wobei der Träger einen mittleren Porendurchmesser von mindestens 25 Angström aufweist.

Bevorzugt verwendet man ein Sorbens, dessen Wassergehalt im Bereich von 0 bis 10 Gew.-%, bezogen auf das Gesamtgewicht des Sorbens, liegt. Das Wasser kann gegebenenfalls chemisch gebunden sein, z.B. silikatisch.

Vorzugsweise verwendet man Sorbenzien, die als Sorptionsmittel ein anorganisches Salz mit Fe²⁺, Fe³⁺, Cu²⁺, Mn²⁺ oder Zn²⁺-Ionen, insbesondere Cu²⁺-Ionen, enthalten.

Organische Salze können als Anionen beispielsweise deprotonierte negativ geladene Reste von organischen Säuren, beispielsweise Carbonsäuren, aufweisen. Beispiele sind Acetat-Salze, z.B. Kupferacetat. Geeignet sind auch Zitrate, beispielsweise Kupferzitrat, oder Formiate, z.B. Kupferformiat.

Bevorzugt verwendet man im erfindungsgemäßen Verfahren als Sorptionsmittel anorganische Salze der genannten Metall-Kationen. Beispielsweise kann man Halogenide, Sulfate, Phosphate oder Nitrat einsetzen. Besonders gut geeignet sind als Sorptionsmittel die Fluoride, Chloride, Sulfate oder Nitrate, insbesondere Kupferfluorid, Kupferchlorid, Kupfersulfat oder Kupfernitrat, wobei das Kupfer jeweils in der Oxidationsstufe +2 vorliegt.

Als oxidische Träger kann man amorphe Träger auf Basis der obengenannten Oxide verwenden. Man kann auch amorphe oxidische Träger einsetzen, die kristalline Materialien, beispielsweise Zeolithe, enthalten. Derartige kristalline Anteile liegen zweckmäßig in einem Bereich von 0,1 bis 80 Gew.-% im Sorbens vor.

Im Verfahren der vorliegenden Erfindung verwendet man bevorzugt amorphe oxidische Träger, insbesondere auf Basis von SiO₂, Al₂O₃ oder Alumosilikat. Hervorragend geeignet sind Sorbenzien auf Basis von amorphem SiO₂ und Alumosilikat, die als Sorptionsmittel Kupferfluorid oder -chlorid, Kupfersulfat oder Kupfernitrat mit Kupfer der Oxidationsstufe 2+ aufweisen.

Das Kation des enthaltenen Sorptionsmittels kann in einer Menge von 0,1 bis 40 Gew.-%, vorzugsweise 0,5 bis 30 Gew.-%, bezogen auf das Gesamtgewicht des Sorbens, enthalten sein.

Sofern man Sorbenzien mit amorphem oxidischem Trägermaterial verwendet, liegt das Porenvolumen zweckmäßig im Bereich von 0,1 bis 1 ml/g. Der mittlere Porendurchmesser des amorphen oxidischen Trägers liegt vorteilhaft im Bereich von 25 bis 10.000 Å, vorzugsweise 25 bis 5.000 Å.

Dabei eignen sich Sorbenzien mit Makroporen, d.h. einem mittleren Porendurchmesser von 200 Å oder größer, besonders gut bei der Abtrennung von NH₃ aus feuchten Gasströmen. Die relative Feuchte kann bis zu 100 % betragen. Die Kapazität dieser Sorbenzien steigt sogar bei höherer relativer Feuchte; die Selektivität bezüglich der Ammoniaksorption ist im Bereich von 20 % bis 80 % relativer Feuchte besonders hoch. Sorbenzien mit mittleren Porendurchmessern im Bereich von 300 bis 3.000 Å sind besonders vorteilhaft.

Das Sorbens kann in verschiedenster Raumform im erfindungsgemäßen Verfahren eingesetzt werden, z.B. als Granulat, Strangpreßling oder Monolith. Die Sorbenzien können auch, wie später beschrieben wird, nach der Sol-Gel-Methode hergestellt werden. Dabei können sie zu beliebigen Formen gegossen oder, in der Stufe des Gels, in die gewünschte Form geschnitten werden. Besonders bevorzugt sind Sorbenzien in Perlform. Der Durchmesser dieser perlförmigen Sorbenzien liegt zweckmäßig im Bereich von 0,5 bis 10 mm. Derartige perlförmige Sorbenzien können, wie noch beschrieben wird, nach der Öltropfmethode hergestellt werden.

Ein Vorteil bei dem erfindungsgemäßen Verfahren ist, daß man das verwendete, beladene Sorbens vom sorbierten Ammoniak weitgehend befreien und wiederverwenden kann. Das Sorbens kann mit bis zu 30 Gew.-% NH₃ beladen sein. Zur Regeneration wird es erhitzt. Hierbei reicht eine Temperatur unterhalb von 250 °C aus. Das regenerierte Sorbens kann im erfindungsgemäßen Verfahren wiederverwendet werden, das desorbierte Ammoniak fällt in hoher Konzentration an und kann ebenfalls einer sinnvollen Verwendung zugeführt werden.

Im Prinzip kann das erfindungsgemäße Verfahren zur Abtrennung von Ammoniak aus beliebigen, Ammoniak enthaltenden Gasen angewendet werden. Es eignet sich sehr gut beispielsweise für Ammoniak enthaltende Sumpf- oder Deponiegase, landwirtschaftliche Abgase, beispielsweise aus der Tierhaltung, sowie auch industrielle Abgase, beispielsweise aus der Soda-Fabrikation. Ammoniak kann auch aus Flüssigkeiten, z.B. Wasser, Gülle oder industriellen, NH₃ enthaltenden Abwässern sorbiert werden. Auch wasserhaltiges (Gehalt an Wasser von wenigen ppm, z. B. 5 ppm, bis hin zur Sättigungsgrenze) Abgas, das NH₃ enthält, kann behandelt werden. Zweckmäßig stellt man einen alkalischen pH ein, z.B. einen pH-Wert von 9 oder größer, und leitet Strippgase durch die Flüssigkeit. Aus dem resultierenden, NH₃ enthaltenden Strippgas kann das NH₃ sogar in Anwesenheit von Wasser selektiv sorbiert werden.

Das im erfindungsgemäßen Verfahren anzuwendende Sorbens ist sehr aktiv und weist eine vergleichsweise hohe Pufferkapazität aus. Es kann daher sowohl bei Gasströmen angewendet werden, die niedrige Konzentrationen an Ammoniak, beispielsweise 10 ppm und niedriger aufweisen, als auch bei solchen, die hohe Konzentrationen an Ammoniak aufweisen, beispielsweise 100.000 ppm und mehr. Das erfindungsgemäße Verfahren kann daher nicht nur angewendet werden, um Abgase durch Abtrennung des vorhandenen Ammoniaks umweltverträglicher zu machen, sondern es kann auch angewendet werden, um den Ammoniakgehalt aus industriell zu verwendenden Prozeßströmen zu entfernen. Beispielsweise kann man aus katalytisch zu behandelnden Gasen den Ammoniakgehalt durch das erfindungsgemäße Verfahren selektiv vermindern und dadurch gegen Ammoniak empfindliche Katalysatoren gegen Vergiftung durch Ammoniak schützen. Gerade hier ist die hohe Pufferkapazität, Selektivität und hohe Aktivität des im erfindungsgemäßen Verfahren einzusetzenden dotierten oxidischen Materials von Vorteil.

Ein weiterer Gegenstand der vorliegenden Erfindung ist das im erfindungsgemäßen Verfahren einsetzbare Sorbens. Das erfindungsgemäße Sorbens umfaßt ein Sorptionsmittel ausgewählt aus der Gruppe der anorganischen oder organischen Salze mit Fe²⁺, Fe³⁺, Co²⁺, Ni²⁺, Cr²⁺, Cr³⁺, Cu¹⁺, Cu²⁺, Mn²⁺ und Zn²⁺-Ionen auf einem oxidischen Träger auf Basis von SiO₂, Al₂O₃ oder Alumosilikat mit einem mittleren Porendurchmesser von 25 bis 10.000 Å. Der Wassergehalt des Sorbens liegt vorzugsweise im Bereich von 0 bis 10 Gew.-%, bezogen auf das Gesamtgewicht des Sorbens. Weitere bevorzugte Ausführungsformen des erfindungsgemäßen Sorbens entsprechen denjenigen, wie sie in bevorzugten Ausführungsformen des Anwendungsverfahrens zu verwenden sind.

Der mittlere Porendurchmesser beträgt vorzugsweise 25 bis 5.000 Å.

Ein besonders bevorzugtes Sorbens ist perlförmig mit einem Durchmesser von 0,5 bis 10 mm und umfaßt Cu²⁺-Ionen auf einem amorphen oxidischen Träger auf Basis SiO₂ oder Alumosilikat, der Porendurchmesser des Trägers liegt im Bereich von 25 bis 10.000 Å, und das Porenvolumen im Bereich von 0,1 bis 1 ml/g. Der Gehalt an Sorptionsmittel, in Form von Kupferhalogenid, vorzugsweise Kupferfluorid oder Kupferchlorid, Kupfersulfat oder Kupfernitrat liegt im Bereich von 0,5 bis 30 Gew.-%. Das Sorbens kann gegebenenfalls noch kristalline Anteile wie Zeolithe in einer Menge von 0,1 bis 80 Gew.-%, bezogen auf das Gesamtgewicht des Sorbens enthalten.

Für die Sorption von NH₃ aus feuchten Gasströmen besonders geeignete Sorbenzien sind solche, die einen mittleren Porendurchmesser von 200 Å oder größer aufweisen, beispielsweise 200 bis 10.000 Å, vorzugsweise 300 bis 3.000 Å. Die BET-Oberfläche (Stickstoffmethode) liegt vorteilhaft unter 100 m²/g. Besonders SiO₂ ist hier vorteilhaft, ebenso Al₂O₃.

Im folgenden werden Verfahren zur Herstellung des erfindungsgemäßen Sorbens angegeben. Die Herstellung oxidischer Materialien auf Basis von amorphem SiO₂, Al₂O₃ oder Alumosilikat ist dem Fachmann bekannt. Kristallines Alumosilikat beispielsweise kann analog dem Verfahren der DE-AS 1 038 015 hergestellt werden. Dabei wird Natriumaluminat-Lösung und Natriumsilikat-Lösung unter Gel-Bildung miteinander vermischt und zur Kristallisation gebracht. Je nach Mol-Verhältnis von Silicium und Aluminium können verschiedene Zeolithe erzeugt werden. Anschließend können sich übliche Verfahrensstufen wie Altern, Basenaustausch, Trocknen oder Tempern anschließen. Durch Imprägnieren mit einem der oben als zu verwendendes Sorptionsmittel bezeichneten Salze wird das erfindungsgemäße Sorbens hergestellt.

Die Herstellung amorpher Alumosilikate kann analog dem in der DE-OS 29 17 313 beschriebenen Verfahren erfolgen. Dabei werden eine Aluminat- und eine Silikat-Lösung vereinigt. Wenn das Gemisch sofort in ein Fällöl gegeben wird, bilden sich perlförmige Körper aus amorphem Alumosilikat. Zur Herstellung des erfindungsgemäßen Sorbens kann man einer oder beiden Ausgangslösungen Kupfersalze, beispielsweise Kuprate, zufügen; man verzichtet dann auf den Basenaustausch. Vorzugsweise geht man jedoch so vor, daß man die gebildeten perlförmigen Körper zunächst altert und gewünschtenfalls trocknet und tempert und mit einer Dotierlösung, die ein oder mehrere der oben als Sorptionsmittel angegebenen Salze enthält, kontaktiert. Man kann vor dem Trocknen imprägnieren. Vorzugsweise imprägniert man nach dem Trocknen, da hierbei besonders wirksame Sorbenzien erhalten werden. Nach dem Imprägnieren, das gewünschtenfalls mehrfach durchgeführt werden kann, wird das Sorbens getrocknet, bis der Wassergehalt zwischen 0 und 10 Gew.-% beträgt.

Eine weitere Möglichkeit zur Herstellung der erfindungsgemäßen Sorbenzien besteht darin, eine (saure) Aluminiumsulfat-Lösung und eine Silikat-Lösung miteinander zu vereinigen und dabei in amorphes Alumosilikat zu überführen. Auch bei diesem Verfahren erhält man bei sofortiger Eingabe der miteinander vermischten Lösungen in ein Fällöl wiederum perlförmige Körper. Diese können wie oben beschrieben, gewünschtenfalls nach Altern, Trocknen und Tempern sowie Basenaustausch, mit Lösungen der angegebenen organischen oder anorganischen Salze kontaktiert werden. Danach werden die Sorbenzien getrocknet.

Ein erfindungsgemäßes Sorbens auf Basis von amorphem SiO₂ wird erhalten, wenn man Silikat-Lösung, z.B. Wasserglas, mit Säurelösung vereinigt. Bei Eintropfen in ein Fällöl erhält man wiederum perlförmige Körper, die, gewünschtenfalls nach Altern, Trocknen und Tempern sowie Basenaustausch mit den angegebenen Salzen imprägniert werden. Anschließend wird wiederum getrocknet.

Um erfindungsgemäße Sorbenzien zu erhalten, die amorphe oxidische Träger mit kristallinen Anteilen aufweisen, kann man beispielsweise einer oder beiden der beim Herstellungsverfahren miteinander zu vereinigenden Ausgangslösungen diese kristallinen Anteile, beispielsweise Zeolithe, in mehr oder weniger fein verteilter Form dispergiert zusetzen.

Selbstverständlich können auch käufliche oxidische Materialien mit den obenangegebenen Sorptionsmitteln imprägniert werden. Ein sehr wirksames erfindungsgemäßes Sorbens kann beispielsweise durch Imprägnieren des käuflichen Sorbens "AF25^{R}", Lieferant Solvay Catalysts GmbH, mit einem der obenbezeichneten Salze, beispielsweise Kupferchlorid, hergestellt werden. Dieses Sorbens AF25^{R} ist aluminiumfrei, besteht aus amorphem SiO₂, liegt in Perlform vor und hat eine BET-Oberfläche von 780 m²/g und ein Porenvolumen von 0,55 ml/g. Der mittlere Porenradius beträgt 12,5 Å, der Porendurchmesser 25 Å. Gut brauchbar ist auch das Sorbens "AF125^{R}", welches einen Porendurchmesser von 125 Å aufweist.

Für die Sorption von NH₃ aus feuchten Gasströmen eignet sich das, mit einem der oben bezeichneten Salze imprägnierte, Sorbens auf Basis von "AF500^{R}", Lieferant Solvay Catalysts GmbH, sehr gut. Das Sorbens AF500^{R} ist aluminiumfrei, besteht aus amorphen SiO₂, liegt in Perlform vor und hat eine BET-Oberfläche, ermittelt nach der Stickstoffmethode, von 75 m²/g. Das Porenvolumen beträgt 0,9 ml/g, der mittlere Porendurchmesser 500 Å.

Gut geeignet ist auch das Handelsprodukt "KC-Trockenperlen N^{R}", Lieferant Solvay Catalysts GmbH, Hannover. Es handelt sich hierbei um Perlen mit einem Durchmesser von etwa 3,5 mm, mit einem Rüttelgewicht von ca. 0,8 kg/l, einer spezifischen Oberfläche von ca. 750 m²/g. Die Zusammensetzung ist amorphe Kieselsäure und amorphes Alumosilikat, wobei der Anteil an SiO₂ ca. 97 % und der Anteil an Al₂O₃ ca. 3 % beträgt. Sehr gut geeignet ist auch das Sorbens "KC-Trockenperlen WS^{R}" vom gleichen Lieferanten. Die Zusammensetzung entspricht den Trockenperlen N, das Rüttelgewicht liegt bei ca. 0,7 kg/l, die spezifische Oberfläche beträgt ca. 650 m²/g. Auch die "KC-Trockenperlen W^{R}" sind gut brauchbar.

Geeignet ist beispielsweise auch Zeolith Y in der Natrium-Form, der durch Imprägnieren mit einem der obenbezeichneten Salze und dem anschließenden Trocknen in das erfindungsgemäße Sorbens überführt werden kann.

Die erfindungsgemäßen Sorbenzien zeichnen sich durch hohe Selektivität und Kapazität - bei Porendurchmessern von 200 Å und mehr auch bei Anwendung auf feuchte Gasströme - aus. Sorbenzien mit amorphen oxidischen Trägern weisen darüber hinaus noch den Vorteil auf, daß sie einerseits bereits bei der Herstellung in die gewünschte Form, beispielsweise Perlform, gebracht werden können und ihre Stoffeigenschaften wie BET-Oberfläche und Porenvolumen bei der Herstellung in gewünschter Weise beeinflußt werden können.

Die folgenden Beispiele sollen die Erfindung weiter erläutern, ohne sie in ihrem Umfang einzuschränken.

### Beispiel 1:

### Herstellung eines erfindungsgemäßen Sorbens auf Basis von amorphem SiO₂ mit Kupferchlorid als Sorptionsmittel

Das Handelsprodukt "AF25^{R}", ein perlförmiges Absorptionsmittel aus amorphem SiO₂, wurde 24 Stunden lang bei Raumtemperatur mit einer Tränklösung kontaktiert, die pro Liter etwa 0,8 Mol CuCl₂-Dihydrat enthielt. Die überstehende Lösung wurde dann abgegossen und die getränkten Proben für 24 Stunden bei 150 °C im Trockenschrank getrocknet. Vor der Tränkung wurden die Proben durch Lagerung in feuchter Luft mit H₂O gesättigt.
Nach dem Trocknen wies das fertige Sorbens einen Kupfergehalt von 4,55 Gew.-% auf.

### Beispiel 2:

### Herstellung von Sorbenzien auf Basis von amorphem SiO₂ mit erhöhtem Kupfergehalt

Beispiel 1 wurde wiederholt. Diesmal wurde jedoch eine Tränklösung verwendet, die pro Liter etwa 2,0 Mol CuCl₂-Dihydrat enthielt. Das fertige Sorbens enthielt diesmal einen Kupfergehalt von 16,5 Gew.-%.

### Beispiel 3:

### Herstellung von kupferdotiertem Zeolith Y in der Natriumform

Zeolith Y in der Na-Form, Handelsprodukt NaY der Firma Grace, in Form von Granulat mit einem Durchmesser zwischen 1,6 und 3 mm, wurde 16 Stunden lang mit einer Tränklösung kontaktiert, welche 0,08 mol CuCl₂-Dihydrat pro Liter enthielt. Die überstehende Lösung wurde abgegossen und die getränkten Partikel 24 Stunden lang bei 150 °C im Trockenschrank getrocknet. Das erhaltene Sorbens wies einen Kupfergehalt von 5,13 Gew.-%, einen Natriumgehalt von 3,27 Gew.-% und einen Chlorgehalt unterhalb 0,33 Gew.-% auf.

### Beispiel 4:

### Anwendung erfindungsgemäßer Sorbenzien zur Abtrennung von NH₃ aus Luft

Allgemeine Vorgehensweise:
Vor der Messung wurden die zu untersuchenden Sorbenzien für eine Dauer von 16 Stunden bei 160 °C aktiviert.
Als Testgas wurde Luft verwendet, die 1.000 ppm NH₃ und 1.100 ppm H₂O enthielt. Die Raumgeschwindigkeit betrug 1.200 l pro Stunde und Liter Sorbens, die Kontaktzeit der zu reinigenden Luft mit dem Sorbens betrug 3 Sekunden.
Die Gesamtaufnahme an NH₃, die relative NH₃-Beladung angegeben in Gew.-%, wurde aus den Verläufen der Durchbruchskurven durch Integration ermittelt. Die NH₃-Selektivität entspricht dem Quotienten NH₃-Aufnahme (g)/Gesamtbeladung (g), wobei die NH₃-Aufnahme-Kapazität durch die graphische Integration der Durchbruchskurve und die Gesamtbelegung zu diesem Zeitpunkt durch Wägung erfolgt. Durch Differenzbildung beider Werte kann die H₂O-Aufnahme bestimmt werden.

### Beispiel 4.1.:

### Anwendung des Sorbens aus Beispiel 1

Das Sorbens aus Beispiel 1 wurde über 4 Sorptionszyklen untersucht. Jeweils nach erreichter Maximalbeladung wurde es durch Erhitzen auf eine Temperatur von 200 °C regeneriert. Die jeweils ermittelten Kapazitäten, Gesamtaufnahmen und NH₃-Selektivitäten sind in Tabelle 1 zusammengestellt.

**Tabelle 1**

| Anwendung des Sorbens aus Beispiel 1 | | | | | |
|---|---|---|---|---|---|
| Probe | NH₃-Gleichgewichts-Beladung (Gew.-%) | | NH₃-Selektivität*** | | (%) Regeneration |
| | 1.* | Dyn.** | 1. | Dyn. | (°C) |
| AF25 mit 4,6 % Cu | 4,7 | 2,9 | 60,4 | 53 | 200 |
| AF25 mit 16,5 % Cu | 9,0 | 4,7 | 83 | 66 | 200 |

| | | | | | |
|---|---|---|---|---|---|
| * 1. = 1. Zyklus | | | | | |
| ** Dyn. = mittlerer dynamischer Wert aus Zyklus 2. - 4. | | | | | |
| *** NH₃-Selektivität (%) = X_{NH3} / (X_{NH3} + X_{H20}) ; Xᵢ = Teilbeladung (Gew.-%) | | | | | |

Der Tabelle kann entnommen werden, daß die Kapazität zunächst abfällt und ab Zyklus 2 konstant bleibt. Die Selektivität ist fast gleichbleibend sehr hoch.

### 4.2.: Anwendung des Sorbens aus Beispiel 2

Beispiel 4.1. wurde unter Verwendung des Sorbens aus Beispiel 2 wiederholt. Es zeigte sich, daß die NH₃-Beladung z.B. im 1. Zyklus mit 9,0 Gew.-% höher war als bei dem aus Beispiel 1 erhaltenen Sorbens, bei welchem die NH₃-Beladung 4,7 Gew.-% betrug, siehe Tabelle 1.

### 4.3.: Anwendung des in Beispiel 3 hergestellten Sorbens

Der erste Zyklus von Beispiel 4.1. wurde unter Verwendung des in Beispiel 3 hergestellten Sorbens wiederholt. Die ermittelten Daten sind in Tabelle 2 zusammengestellt. Die Kapazität ist recht hoch, die Selektivität aber, verglichen mit dem Sorbens aus Beispiel 1, geringer.

**Tabelle 2**

| Anwendung des Sorbens aus Beispiel 3 (NaY+Cu) | |
|---|---|
| NH₃-Kapazität | |
| Gew.-% | 5 |
| NH₃+H₂O Ges.-Aufn. Gew.-% | 15,5 |
| NH₃-Selektivität/% | 32,7 |

Das Ammoniak liegt bei der Desorption in hoher Konzentration bis zu 20 Gew.-%, im Desorptionsgasstrom vor. Damit ist nachgewiesen, daß mit dem erfindungsgemäßen Verfahren eine starke Anreicherung von Ammoniak und damit seine Wiederverwertbarkeit ermöglicht wird. Beispielsweise kann man es von 0,1 % (= 1.000 ppm) auf einen Anteil von bis zu 20 Gew.-% anreichern.

### Beispiel 5:

### Herstellung eines erfindungsgemäßen Sorbens auf Basis von weitporigem, amorphem SiO₂ mit Kupfersulfat als Sorptionsmittel

Das Handelsprodukt "AF500^{R}" (mittlerer Porendurchmesser etwa 500 Å), ein perlförmiges Absorptionsmittel aus amorphem SiO₂, wurde 24 Stunden lang bei Raumtemperatur mit einer Tränklösung kontaktiert, die pro Liter etwa 0,85 Mol CuSO₄-Pentahydrat enthielt. Die überstehende Lösung wurde dann abgegossen und die getränkten Proben für 24 Stunden bei 150 °C im Trockenschrank getrocknet.
Nach dem Trocknen wies das fertige Sorbens einen Kupfergehalt von 4,3 Gew.-% auf.

### Beispiel 6:

### Herstellung von Sorbenzien auf Basis von weitporigem, amorphem Al₂O₃ (mittlerer Porendurchmesser etwa 300 Å) mit erhöhtem Kupfergehalt

Beispiel 1 wurde wiederholt. Diesmal wurde jedoch ein perlförmiges Adsorptionsmittel aus amorphem Al₂O₃ dotiert. Das fertige Sorbens enthielt diesmal einen Kupfergehalt von 4,7 Gew.-%.

### Beispiel 7:

### Anwendung erfindungsgemäßer Sorbenzien zur Abtrennung von NH₃ aus feuchter Luft

Allgemeine Vorgehensweise:
Wie unter Beispiel 4 genannt, jedoch als Testgas wurde Luft verwendet, die 1.000 ppm NH₃ und >20.000 ppm H₂O = 95 % relativer Feuchte enthielt.

### Beispiel 7.1.:

### Anwendung des Sorbens aus Beispiel 5

Das Sorbens aus Beispiel 5 wurde über 4 Sorptionszyklen untersucht. Jeweils nach erreichter Maximalbeladung wurde es durch Erhitzen auf eine Temperatur von 200 °C regeneriert. Die jeweils ermittelten Kapazitäten, Gesamtaufnahmen und NH₃-Selektivitäten sind in Tabelle 3 zusammengestellt.

**Tabelle 3**

| Anwendung des Sorbens aus Beispiel 5 | | | | | |
|---|---|---|---|---|---|
| Probe | NH₃-Gleichgewichts-Beladung (Gew.-%) | | NH₃-Selektivität*** | | (%) Regeneration |
| | 1.* | Dyn.** | 1. | Dyn. | (°C) |
| AF500 mit 4,3 % Cu | 3,7 | 2,9 | 45,5 | 35,7 | 200 |
| Al₂O₃ mit 4,7 % Cu | 3,7 | 2,9 | 27,6 | 21,6 | 200 |

| | | | | | |
|---|---|---|---|---|---|
| * 1. = 1. Zyklus | | | | | |
| ** Dyn. = mittlerer dynamischer Wert aus Zyklus 2. - 4. | | | | | |
| *** NH₃-Selektivität (%) = X_{NH3} / (X_{NH3} + X_{H20}) ; Xᵢ = Teilbeladung (Gew.-%) | | | | | |

Der Tabelle 3 kann entnommen werden, daß die Kapazität (wie in Tabelle 1) nach dem 1. Zyklus abfällt und ab Zyklus 2 konstant bleibt. Die Selektivität ist trotz hoher relativer Feuchte im Gasstrom fast gleichbleibend sehr hoch.

### 7.2.: Anwendung des Sorbens aus Beispiel 6

Beispiel 5 wurde unter Verwendung des Sorbens aus Beispiel 6 wiederholt. Die ermittelten Daten sind in Tabelle 3 zusammengestellt. Die Kapazität ist recht hoch, die Selektivität aber, verglichen mit dem Sorbens aus Beispiel 5, geringer, da das Material aufgrund des kleineren mittleren Porendurchmessers, mehr H₂O aufnimmt.

## Patentansprüche

1. Verfahren zur Sorption von NH₃ aus Gasen, dadurch gekennzeichnet, daß man das Gas mit einem selektiven NH₃-Sorbens, umfassend ein Sorptionsmittel ausgewählt aus der Gruppe der anorganischen oder organischen Salze mit Fe²⁺, Fe³⁺, Co²⁺, Ni²⁺, Cr²⁺, Cr³⁺, Mn²⁺, Zn²⁺, Cu¹⁺ oder Cu²⁺-Ionen auf einem oxidischen Träger auf Basis von SiO₂, Al₂O₃ oder Alumosilikat kontaktiert, wobei der Träger einen mittleren Porendurchmesser von mindestens 25 Angström aufweist.

2. Verfahren nach Anspruch 1, dadurch gekennzeichnet, daß der Wassergehalt des Sorbens im Bereich von 0 bis 10 Gew.-% bezogen auf das Gesamtgewicht des Sorbens liegt.

3. Verfahren nach Anspruch 1 oder 2, dadurch gekennzeichnet, daß das Sorbens als Sorptionsmittel ein anorganisches Salz mit Fe²⁺, Fe³⁺, Mn²⁺, Zn²⁺ oder Cu²⁺-Ionen enthält.

4. Verfahren nach Anspruch 3, dadurch gekennzeichnet, daß es als Sorptionsmittel, CuF₂, CuCl₂, CuSO₄ oder Cu(NO₃)₂ enthält.

5. Verfahren nach einem der vorhergehenden Ansprüche, dadurch gekennzeichnet, daß man ein Sorbens verwendet, dessen Träger aus amorphem oxidischem Material, vorzugsweise SiO₂ oder Alumosilikat besteht.

6. Verfahren nach einem der vorhergehenden Ansprüche, dadurch gekennzeichnet, daß man ein Sorbens verwendet, welches das Kation des verwendeten Salzes in einer Menge von 0,1 bis 40 Gew.-%, vorzugsweise 0,5 bis 30 Gew.-%, bezogen auf das Gesamtgewicht des Sorbens, enthält.

7. Verfahren nach einem der vorhergehenden Ansprüche, dadurch gekennzeichnet, daß das Porenvolumen des amorphen oxidischen Trägers im Bereich von 0,1 bis 1 ml/g liegt.

8. Verfahren nach einem der vorhergehenden Ansprüche, dadurch gekennzeichnet, daß der mittlere Porendurchmesser des amorphen oxidischen Trägers im Bereich von 25 bis 10.000 Angström, vorzugsweise 25 bis 5.000 Angström liegt.

9. Verfahren nach einem der vorhergehenden Ansprüche, dadurch gekennzeichnet, daß man ein in Perlform vorliegendes Sorbens verwendet.

10. Verfahren nach einem der vorhergehenden Ansprüche, dadurch gekennzeichnet, daß man Ammoniak enthaltende Sumpf- oder Deponiegase, Abgase aus der Tierhaltung oder industrielle Abgase behandelt.

11. Verfahren nach einem der vorhergehenden Ansprüche, dadurch gekennzeichnet, daß man das mit Ammoniak beladene Sorbens vom Ammoniak im wesentlichen befreit und wiederverwendet.

12. Verfahren nach Anspruch 11, dadurch gekennzeichnet, daß man das beladene Sorbens bei einer Temperatur unterhalb 250 °C regeneriert.

13. Sorbens zur Anwendung im erfindungsgemäßen Verfahren der Ansprüche 1 bis 12, umfassend ein Sorptionsmittel ausgewählt aus der Gruppe der anorganischen oder organischen Salze mit Fe²⁺, Fe³⁺, Co²⁺, Ni²⁺, Cr²⁺, Cr³⁺, Mn²⁺, Zn²⁺ und Cu¹⁺ oder Cu²⁺-Ionen auf einem oxidischen Träger auf Basis von SiO₂, Al₂O₃ oder Alumosilikat mit einem mittleren Porendurchmesser von 25 Angström bis 10.000 Angström.
